# FASCICULE DE BREVET EUROPEEN

(11) **EP 2 673 162 B1**
(45) Date de publication et mention de la délivrance du brevet: **08.04.2015**
(21) Numéro de dépôt: 12707869.9
(22) Date de dépôt: 06.02.2012
(51) Int. Cl.: B60N 2/02

(54) **DISPOSITIF DE REGLAGE DE LA LONGUEUR D'ASSISE POUR UN SIEGE D'AUTOMOBILE, ET SIEGE COMPORTANT UN TEL DISPOSITIF**
VORRICHTUNG ZUR EINSTELLUNG DER SITZLÄNGE FÜR EINEN KRAFTFAHRZEUGSITZ UND SITZ MIT EINER SOLCHEN VORRICHTUNG
DEVICE FOR ADJUSTING THE SEAT LENGTH FOR A MOTOR VEHICLE SEAT, AND SEAT COMPRISING SUCH A DEVICE

(30) Priorité: 08.02.2011 FR 1151003
(43) Date de publication de la demande: 18.12.2013
(73) Titulaire: Faurecia Sièges d'automobile, 92000 Nanterre (FR)
(72) Inventeur: PLANSON, Jérôme, F-91670 Angerville (FR); PRADIER, Bernard, F-91240 Saint Michel Sur Orge (FR); DUCROHET, Charles-Louis, F-92310 Sevres (FR); CHABERT, Laurent, F-91590 Cerny (FR); NAVATTE, Nicolas, F-61100 Flers (FR)
(74) Mandataire: Thibon, Laurent
(86) Numéro de dépôt international: PCT/FR2012/050252
(87) Numéro de publication internationale: WO 2012/107675

(56) Documents cités:
- WO-A1-2010/057335
- DE-A1-102007 049 865
- DE-A1-102008 006 547
- DE-A1-102008 009 440
- DE-A1-102008 030 608
- DE-A1-102008 046 000
- DE-C1- 10 222 995
- DE-C1- 10 227 730
- DE-U1-202006 001 969

## Description

La présente invention concerne les sièges d'automobiles qui comportent une assise de longueur ajustable à la morphologie de l'utilisateur. De tels sièges permettent d'adapter la longueur d'appui offerte par l'assise à la longueur des jambes de l'utilisateur, pour offrir un meilleur confort par un soutien des cuisses jusqu'à la pliure du genou.

Des sièges de type connu comportent à cette fin une assise comportant un coussin d'assise ajustable en longueur. Pour permettre d'ajuster cette longueur du coussin, il est connu de déplacer seulement la partie avant du coussin, ou nez d'assise, d'avant en arrière.

Des systèmes connus comportent un plateau de support du nez d'assise monté, en coulissement dans la direction avant-arrière, sur une traverse avant de l'armature d'assise. Le plateau est monté sur un chariot coulissant dans une glissière formée sur un support fixe rapporté sur la traverse. Certains de ces systèmes sont à commande manuelle, et d'autres à commande motorisée.

Pour assurer le coulissement du chariot, la plupart des dispositifs de réglage motorisés connus utilisent un système pignon-crémaillère, dans lequel le pignon est entraîné en rotation par un moteur. Ces dispositifs sont généralement très compliqués et disposés, au moins en partie, sous l'armature d'assise, ce qui nécessite d'intervenir à la fois sous la traverse d'armature et au-dessus de celle-ci pour effectuer le montage du dispositif. De plus, selon que l'on souhaite utiliser une version manuelle ou une version motorisée du dispositif, une adaptation de l'armature peut être nécessaire. De tels dispositifs ne sont pas réellement modulaires.

Dans certains systèmes, par exemple montrés dans DE102008049923, la crémaillère est liée au chariot mobile et le pignon est monté en rotation en position fixe sur le support, le moteur étant alors également fixe par rapport à l'armature d'assise. L'ensemble des pièces de guidage et d'entraînement est placé au-dessus de l'armature d'assise, ce qui facilite son montage sur celle-ci, mais le moteur demeure sous l'armature, ce qui crée un encombrement sous le siège. De plus, ce système de guidage du nez d'assise n'est pas non plus modulaire, ne permettant pas une adaptation simple selon que la commande est manuelle ou motorisée.

Dans d'autres systèmes, par exemple montrés par DE-10227730 ou DE-202006001969, l'entraînement est réalisé par un système vis-écrou, l'ensemble des moyens de guidage et d'entraînement étant aussi disposé sous l'armature et générant donc aussi un encombrement sous le siège. DE-202006001969 montre aussi un système où l'entraînement est réalisé par un système vis-écrou, mais, là encore, le chariot de guidage en coulissement est situé sous l'armature, et donc crée un encombrement sous le siège.

La présente invention a notamment pour but de résoudre les problèmes évoqués ci-dessus. Elle vise particulièrement à fournir un dispositif de guidage et d'entraînement qui soit le plus plat possible, pour pouvoir être placé intégralement au-dessus de l'armature d'assise, sans moteur ni autre pièce en dessous de celle-ci, et sans cependant créer un encombrement au-dessus de l'armature qui pourrait conduire à devoir réduire l'épaisseur du coussin de nez d'assise pour compenser cet encombrement du mécanisme. Elle vise aussi à assurer la modularité du dispositif, en permettant d'utiliser un maximum possible de pièces communes entre la version motorisée du dispositif et une version manuelle de celui-ci.

Avec ces objectifs en vue, l'invention a pour objet un dispositif de réglage de la longueur d'assise pour un siège d'automobile, comportant les caractéristiques de la revendication 1.

Selon l'invention, le dispositif de réglage est caractérisé en ce que les moyens de commande motorisés comportent un moteur disposé vers l'avant du siège, en avant de l'armature et en dessous de la trajectoire du plateau de nez d'assise, plus précisément en dessous de la trajectoire du plateau et du chariot, et le moteur est dissimulé par la matelassure du nez d'assise.

Cette situation avancée du moteur, en avant de l'armature sur laquelle le nez d'assise est monté en coulissement, ne génère donc pas d'augmentation de l'encombrement en hauteur entre l'armature et le nez d'assise, puisque située devant la traverse d'armature d'assise et en dessous du plateau de nez d'assise, et ne génère pas non plus d'encombrement sous l'armature. L'encombrement inévitable du moteur est reporté sous le bord avant du plateau de nez d'assise, à l'intérieur de la partie rembourrée de l'avant du nez d'assise. Le moteur est ainsi dissimulé par la matelassure du nez d'assise.

En fonction des sièges, la dite armature peut être fixe ou mobile, ou comporter une partie principale et une partie intermédiaire mobile par rapport à cette partie principale. L'armature en avant de laquelle le moteur est disposé, selon l'invention, est donc, selon le cas, l'armature principale s'il n'y a pas d'armature intermédiaire, ou une armature intermédiaire en avant de l'armature principale, et, dans tous les cas, il s'agit de l'armature sur laquelle le nez d'assise est monté en coulissement.

Il est aussi précisé que par «moteur» on entend ici de manière générale le moteur électrique proprement dit ainsi que le réducteur qui lui est classiquement associé pour former un motoréducteur.

Selon une disposition préférentielle, le moteur est fixe par rapport à l'armature d'assise, plus préférentiellement encore fixé sur le support fixe. Lorsque le nez d'assise est en position de recul maximal, l'encombrement du moteur prend place à l'intérieur du rembourrage du nez d'assise comme indiqué ci-dessus. Lorsque le nez d'assise est déplacé vers l'avant, le chariot passe au-dessus du moteur, ce dernier ne perturbant donc pas le coulissement du chariot et restant de plus protégé par le chariot et le plateau de nez d'assise.

Par ailleurs, en particulier lorsque le moteur est lié au support fixe, il est possible de pré-assembler l'ensemble des constituants du dispositif, moteur y compris, et il suffit ensuite de monter cet ensemble sur l'armature d'assise, par le dessus, sans qu'il soit besoin d'intervenir également par le dessous de l'armature. Le nez d'assise peut alors être fixé sur le support prémonté sur le chariot, ou bien le support, pré-assemblé avec le nez d'assise, fixé simplement sur le chariot.

Selon une autre disposition préférentielle, l'entraînement du chariot en translation est assuré par un système vis-écrou, dont la vis est disposée longitudinalement, selon la direction de coulissement du chariot, est entraînée en rotation par le moteur, et l'écrou est solidarisé sur le chariot. L'encombrement réduit de la vis et de l'écrou, entre le chariot et le support fixe, permet de conserver à l'ensemble un encombrement minimal en hauteur.

L'invention a aussi pour objet un siège d'automobile ayant une assise à longueur réglable, caractérisé en ce qu'il comporte un dispositif de réglage de la longueur d'assise tel que précédemment défini.

D'autres caractéristiques et avantages apparaîtront dans la description qui va être faite d'un exemple de réalisation d'un dispositif de réglage de la longueur d'assise d'un siège d'automobile conforme à l'invention.

On se reportera aux dessins annexés dans lesquels :
- la figure 1 est une vue en perspective partielle de l'armature d'assise pourvue du dispositif de réglage et montrant la situation du dispositif par rapport à l'armature et par rapport au nez d'assise,
- la figure 2 est une vue en éclaté du dispositif,
- la figure 3 est une vue en coupe longitudinale du dispositif, dans un plan vertical médian,
- la figure 4 est une vue en perspective de dessus du dispositif, le chariot étant en position de butée vers l'arrière, le plateau de nez d'assise n'étant pas ici représenté,
- la figure 5 est une vue similaire à la figure 4, le chariot étant en position avancée,
- la figure 6 est une vue, similaire à la figure 1, d'un dispositif à commande manuelle utilisant notamment un support fixe, un chariot et un plateau de nez d'assise identiques à ceux de l'invention, pour illustrer la modularité du dispositif.

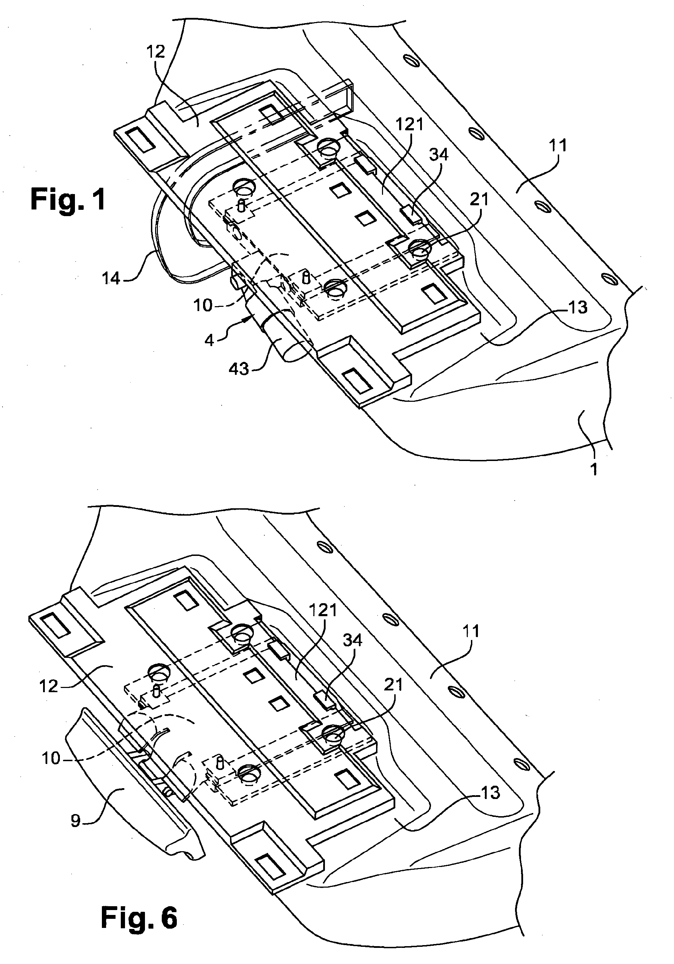

La figure 1 montre partiellement l'armature d'assise 1, typiquement en tôle emboutie, comportant une traverse avant 11, l'avant du siège étant situé vers la gauche sur les différentes figures. Le plateau 12 portant le nez d'assise est fixé sur le dispositif de réglage 10, qui est lui-même fixé dans un dégagement 13 formé par emboutissage sur la traverse 11. On a schématisé, sur la figure 1, la forme de la matelassure du nez d'assise 14 par le tracé de la section de cette matelassure.

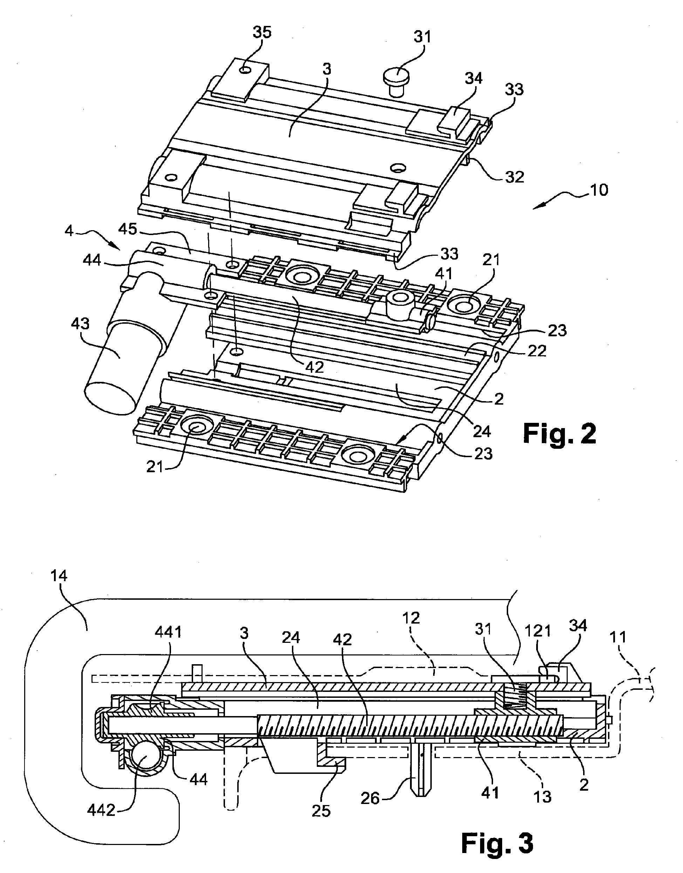

Le dispositif de réglage 10, mieux visible aux figures 2 et 4 à 6, comporte :
- une plaque de support fixe 2, solidarisée sur la traverse 11,
- un chariot 3 guidé en coulissement sur le support fixe 2,
- des moyens de commande motorisés 4 pour commander le coulissement du chariot 3 par rapport au support fixe 2.

La plaque de support fixe 2 comporte un crochet 25 et des centreurs 26 pour assurer le positionnement de la plaque sur la traverse 11, et des trous de fixation 21 pour la fixer sur la traverse 11 par vissage ou rivetage par exemple. Les trous de fixation 21 sont situés sur des zones de bord latérales de la plaque de support.

Le chariot 3 est guidé en translation sur la plaque de support fixe 2 par un double jeu de glissières :
- une première glissière, située dans une zone médiane, est constituée par une nervure 32 formée sur la face de dessous du chariot 3 coulissant dans une rainure 22 formée dans la plaque de guidage 2,
- une deuxième glissière, constituée par deux rainures parallèles 23, formées au voisinage des bords latéraux de la plaque de support 2, dans lesquelles des nervures constituées par les bords latéraux 33 du chariot 3 sont insérées en coulissement, avec un jeu dans le plan horizontal.

La première glissière assure le guidage dans le plan horizontal, et le deuxième système de glissière sert uniquement à maintenir le chariot dans la direction verticale contre la plaque de guidage 2, le jeu horizontal précité permettant d'éviter les risques de coincement par arc-boutement du chariot dans la plaque de support.

Un espace central 24 est ménagé entre la plaque de support 2 et le chariot 3. Les moyens de commande motorisée comportent un système vis-écrou 41, 42 qui est disposé dans cet espace central, l'écrou 41 étant fixé sur le chariot 3 par une vis 31 ou autre moyen de fixation équivalent, et la vis 42 s'étendant selon la direction de coulissement et étant entraînée en rotation par le moteur 43 via un réducteur 44 à roue 441 et vis sans fin 442. Par ailleurs, la vis 42 du système vis-écrou de translation du chariot est maintenue fixe dans sa direction axiale par sa liaison avec la roue 441 du réducteur 44.

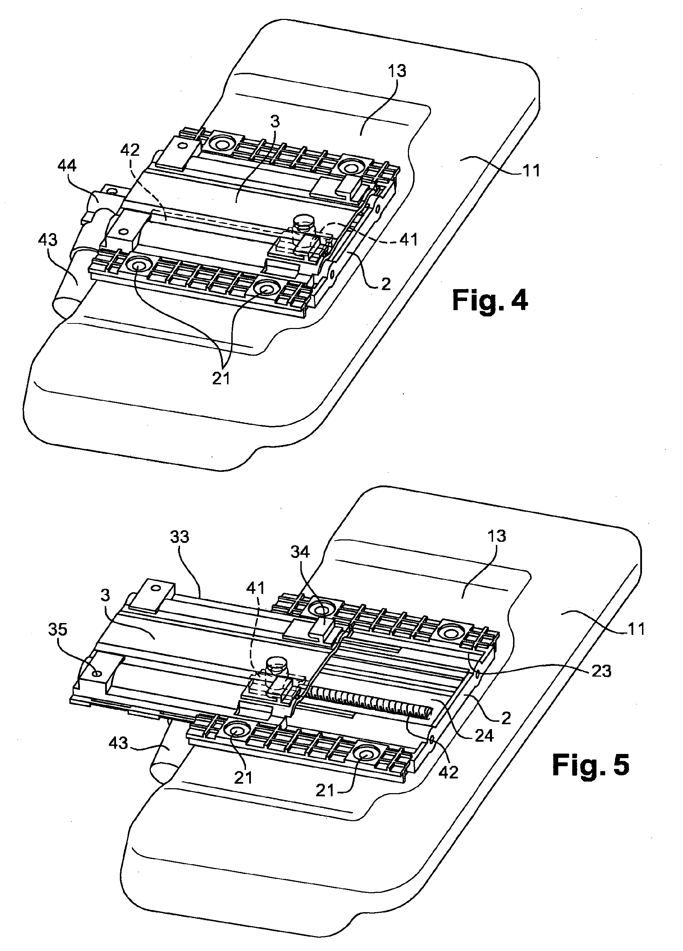

L'ensemble moteur-réducteur 43, 44 est disposé à l'avant de la plaque de support 2, et en dessous de la trajectoire du chariot 3, de manière à ne pas gêner le coulissement du chariot, ainsi qu'on le voit en figures 3 et 5. L'ensemble moteur-réducteur est préférentiellement fixé directement sur la plaque support 2, par exemple par le carter 45 du réducteur assemblé sur ladite plaque, comme on le comprend de la figure 2.

Le plateau 12 de nez d'assise est solidarisé sur le chariot 3 par engagement de son bord arrière 121 dans des crochets 34 formés sur le chariot 3, puis vissage vers l'avant dans les trous 35 du chariot.

La figure 6 ne présente pas un dispositif motorisé selon l'invention, mais un dispositif de réglage à commande manuelle, dont le positionnement et le verrouillage en position sont commandés par une poignée 9. Le principe de fonctionnement d'un tel dispositif à commande manuelle a notamment été décrit dans la demande de brevet français n°1053021. La représentation de la figure 6 permet de voir l'exacte correspondance des formes extérieures du dispositif 10, du plateau 12, et des moyens de liaison du plateau sur le dispositif, conformes à la présente invention et visibles sur la figure 1, avec les éléments correspondants du dispositif à commande manuelle de la figure 6. Au vu des figures 1 et 6, on pourra donc constater que la construction modulaire du dispositif permet d'utiliser le support 2, le chariot 3, le plateau 12, ainsi que les divers moyens d'assemblage et de fixation de ces éléments, non seulement pour le dispositif conforme à la présente invention mais aussi pour un dispositif de réglage à commande manuelle, susceptible d'être monté sur des sièges d'automobiles d'une gamme différente. Une telle modularité et adaptation permet donc de produire les pièces communes en plus grande série, donc de manière plus économique, et permet aussi de simplifier les opérations de montage sur le siège, puisque identiques pour les versions motorisées et manuelles du dispositif de réglage.

On notera incidemment que l'espace central 24 entre chariot et plaque de support peut également être adapté pour y loger les composants d'un tel système de commande de coulissement et de verrouillage manuel, par exemple des organes de rappels élastiques agissant pour faire coulisser le chariot et des organes de verrouillage commandés par la poignée 9 pour le bloquer dans une position désirée. Pour plus de détails sur de telles dispositions, on pourra se reporter à la demande de brevet français n°1053021 précitée.

L'invention n'est pas limitée au mode de réalisation qui vient d'être décrit uniquement à titre d'exemple. Le système d'entraînement pourrait être modifié, le motoréducteur étant par exemple lié au chariot. Le système à roue et vis sans fin pourrait aussi être inversé, le moteur entraînant en rotation l'écrou et la vis étant maintenue fixe en rotation. Les glissières pourraient aussi être modifiées ou complétées par des moyens assurant un renforcement du maintien du plateau de nez d'assise par rapport à la traverse.

## Revendications

1. Dispositif de réglage de la longueur d'assise pour un siège d'automobile, comportant tous les éléments mentionnés ci-après: un plateau (12) de nez d'assise mobile par rapport à une armature (11) d'assise, le plateau (12) étant monté sur un chariot (3) guidé en coulissement sur un support fixe (2) fixé au-dessus de ladite armature, le chariot (3) et le support (2) étant situés entre l'armature et le plateau de nez d'assise, et le dispositif comportant des moyens de commande motorisés pour commander le coulissement du chariot par rapport au support fixe,
**caractérisé en ce que** les moyens de commande motorisés (4) comportent un moteur (43, 44) disposé vers l'avant du siège, en avant de l'armature (1) et en dessous de la trajectoire du plateau (12) de nez d'assise, et le moteur (43, 44) est dissimulé par la matelassure (14) du nez d'assise.

2. Dispositif selon la revendication 1, **caractérisé en ce que** le moteur (43, 44) est fixe par rapport à l'armature d'assise.

3. Dispositif selon la revendication 2, **caractérisé en ce que** le moteur (43, 44) est fixé sur le support fixe (2).

4. Dispositif selon la revendication 1, **caractérisé en ce que** l'entraînement du chariot en translation est assuré par un système vis-écrou (41, 42), dont la vis (42) est disposée longitudinalement, selon la direction de coulissement du chariot.

5. Dispositif selon la revendication 4, **caractérisé en ce que** la vis (42) du système vis-écrou (41, 42) est entraînée en rotation par le moteur (43, 44), et l'écrou (41) est solidarisé sur le chariot (3).

6. Dispositif selon la revendication 1, **caractérisé en ce que** les moyens de commande motorisés (4) comportent un moteur (43) et un réducteur à vis sans fin (44).

7. Siège d'automobile ayant une assise à longueur réglable, **caractérisé en ce qu'**il comporte un dispositif (10) de réglage de la longueur d'assise selon l'une quelconque des revendications précédentes.

## Patentansprüche

1. Vorrichtung zum Einstellen der Sitzlänge für einen Motorfahrzeugsitz, welche alle folgend erwähnten Elemente aufweist:
eine Sitzvorderplatte (12), die bezüglich eines Sitzrahmens (11) bewegbar ist, wobei die Platte (12) auf einem Schlitten (3) montiert ist, der verschiebbar auf einem festen Träger (2) geführt ist, der an dem Rahmen befestigt ist, wobei der Schlitten (3) und der Träger (2) zwischen dem Rahmen und der Sitzvorderplatte angeordnet ist, und wobei die Vorrichtung motorgetriebene Steuermittel zum Steuern der Verschiebung des Schlittens bezüglich des festen Trägers aufweist,
**dadurch gekennzeichnet, dass** die motorgetriebenen Steuermittel (4) einen Motor (43, 44) aufweisen, der zum Vorderteil des Sitzes vor dem Rahmen (1) und unter der Laufbahn der Sitzvorderplatte (12) angeordnet ist, und dass der Motor (43, 44) durch die Polsterung (14) des Sitzvorderteils verdeckt ist.

2. Vorrichtung nach Anspruch 1, **dadurch gekennzeichnet, dass** der Motor (43, 44) bezüglich des Sitzrahmens festgelegt ist.

3. Vorrichtung nach Anspruch 2, **dadurch gekennzeichnet, dass** der Motor (43, 44) an dem festen Rahmen (2) festgelegt ist.

4. Vorrichtung nach Anspruch 1, **dadurch gekennzeichnet, dass** das Antreiben des Schlittens bei der Translation durch ein Schrauben-Mutter-System (41, 42) ausgeführt wird, wobei die Schraube (42) in Längsrichtung entlang der Schlittenverschieberichtung angeordnet ist.

5. Vorrichtung nach Anspruch 4, **dadurch gekennzeichnet, dass** die Schraube (42) des Schrauben-Mutter-Systems (41, 42) durch den Motor (43, 44) gedreht wird und die Mutter (41) an dem Schlitten (3) befestigt ist.

6. Vorrichtung nach Anspruch 1, **dadurch gekennzeichnet, dass** die motorgetriebenen Steuermittel (4) einen Motor (43) und ein Schneckenuntersetzungsgetriebe (44) aufweisen.

7. Motorfahrzeugsitz mit einem Sitzunterteil von einstellbarer Länge, **dadurch gekennzeichnet, dass** er die Vorrichtung (10) zum Einstellen der Sitzlänge nach einem der vorhergehenden Ansprüche aufweist.

## Claims

1. A device for adjusting the seating length for a motor vehicle seat, comprising all the elements mentioned hereafter: a seat nose plate (12) mobile with respect to a seating frame (11), the plate (12) being assembled on a carriage (3) slidably driven on a fixed support (2) fixed above said frame, the carriage (3) and the support (2) being located between the frame and the seat nose plate, and the device comprising motor-driven control means for controlling the sliding of the carriage with respect to the fixed support,
**characterized in that** the motor-driven control means (4) comprise a motor (43, 44) arranged towards the front of the seat, in front of the frame (1) and under the trajectory of the seat nose plate (12), and the motor (43, 44) is hidden by the padding (14) of the seat nose.

2. The device of claim 1, **characterized in that** the motor (43, 44) is fixed with respect to the seating frame.

3. The device of claim 2, **characterized in that** the motor (43, 44) is fixed to the fixed support (2).

4. The device of claim 1, **characterized in that** the driving of the carriage in translation is performed by a screw-nut system (41, 42), having its screw (42) arranged longitudinally along the carriage sliding direction.

5. The device of claim 4, **characterized in that** the screw (42) of the screw-nut system (41, 42) is rotated by the motor (43, 44), and the nut (41) is fastened to the carriage (3).

6. The device of claim 1, **characterized in that** the motor-driven control means (4) comprise a motor (43) and a worm reducer (44).

7. A motor vehicle seat having a seat bottom piece of adjustable length, **characterized in that** it comprises the device (10) for adjusting the seating length of any of the foregoing claims.
